# EUROPÄISCHE PATENTSCHRIFT

(11) **EP 2 636 905 B1**
(45) Veröffentlichungstag und Bekanntmachung des Hinweises auf die Patenterteilung: **08.07.2015**
(21) Anmeldenummer: 13154831.5
(22) Anmeldetag: 11.02.2013
(51) Int. Cl.: F04D 29/08, F16J 15/06

(54) **Dichtungsanordnung und Pumpe mit einer Dichtungsanordnung**
Sealing assembly and pump with a sealing assembly
Agencement de joint et pompe dotée d'un agencement de joint

(30) Priorität: 05.03.2012 EP 12158018
(43) Veröffentlichungstag der Anmeldung: 11.09.2013
(73) Patentinhaber: Sulzer Management AG, 8401 Winterthur (CH)
(72) Erfinder: Meuter, Paul, 8472 Seuzach (CH); Welschinger, Thomas, 78315 Radolfzell (DE)
(74) Vertreter: Intellectual Property Services GmbH

(56) Entgegenhaltungen:
- EP-A1- 2 202 432
- DE-A1-102009 061 001
- GB-A- 2 097 070
- US-A- 2 246 977
- US-A- 5 513 859

## Beschreibung

Die Erfindung betrifft Dichtungsanordnung gemäß dem Oberbegriff des Anspruchs 1 und eine Pumpe mit einer Dichtungsanordnung.

Es ist bekannt, dass zwischen zwei Bauteilen, die eine plane Kontaktfläche aufweisen, Dichtungsanordnungen vorgesehen werden. Damit können beispielsweise Druckräume, die zumindest teilweise von den beiden Bauteilen gebildet werden, abgedichtet werden. Dies ist insbesondere bei Pumpen mit einem geteilten Gehäuse der Fall, bei denen zwischen den beiden Gehäuseteilen eine Dichtungsanordnung vorgesehen ist.

Dabei werden beispielsweise so genannte Flachdichtungen eingesetzt. Diese können aus unterschiedlichen Werkstoffen, wie beispielsweise Elastomeren, Pressfasern, Aramidfasern, Kohlefasern, Mineralfasern oder Metall hergestellt werden. Je nach Einsatzzweck kann eine passende Flachdichtung ausgewählt werden. Mit derartigen Dichtungen kann eine gute Dichtwirkung erzielt werden. Allerdings dürfen sich die die Kontaktfläche bildenden Bauteile gegenüber einem optimalen Einbauzustand nur geringfügig deformieren, da Flachdichtungen nur geringe Verformungen der Kontaktfläche ausgleichen können. Um Deformationen zu vermeiden, müssen bei der Verwendung von Flachdichtungen die abzudichtenden Bauteile so steif ausgeführt werden, dass auch bei grossen Belastungen, also bei einer Pumpe bei hohen Drücken nur so geringe Verformungen auftreten, dass die Funktionstüchtigkeit der Flachdichtung nicht gefährdet ist. Um dies zu erreichen, können beispielsweise grosse Wandstärken und/oder aufwändige Verrippungen vorgesehen werden.

Ausserdem ist aus der DE 33 00 505 A1 eine Dichtungsanordnung zur Anordnung zwischen zwei Bauteilen, die eine plane Kontaktfläche aufweisen, bekannt. Die beiden Bauteile sind als Gehäuseteile eines längs geteilten Gehäuses einer Pumpe ausgeführt. Zur Abdichtung wird ein langgestrecktes, flexibles Dichtelement in Form einer Dichtungsschnur mit einem Anfangsbereich und einem Endbereich in einer Nut der Kontaktfläche angeordnet. Die Dichtungsschnur weist an ihrem Endbereich ein flexibles Abschlusselement in Form eines verdickten Endes auf, welches so ausgeführt ist, dass es eine Dichtfunktion ausüben kann. Das Dichtelement und das Abschlusselement sind so ausgeführt, dass sie im Endbereich des Dichtelements einen Überlappungsbereich aufweisen und damit eine durchgängige Dichtkante bilden. Das Abschlusselement ist fest mit dem Dichtungselement verbunden. Es kann beispielsweise als ein zunächst separates Element ausgeführt sein, das in einem gesonderten Arbeitsschritt beispielsweise durch Kleben oder Vulkanisieren fest mit der Dichtungsschnur verbunden wird. GB2097070 A offenbart eine gattungsgemäße Dichtung.

Demgegenüber ist es die Aufgabe der Erfindung, eine einfach herzustellende und einfach montierbare Dichtungsanordnung vorzuschlagen. Erfindungsgemäß wird diese Aufgabe mit einer Dichtungsanordnung mit den Merkmalen des Anspruchs 1 gelöst.

Erfindungsgemäss ist das Dichtelement, also insbesondere der Endbereich des Dichtungselements gegenüber dem Abschlusselement so verschiebbar angeordnet, dass die Dichtkante auch bei einer Verschiebung des Endbereichs des Dichtelements in Richtung Anfangsbereich innerhalb des ersten Überlappungsbereichs erhalten bleibt. Das Dichtelement und das Abschlusselement sind also nicht fest miteinander verbunden, sondern auch in eingebautem Zustand als zwei separate Teile ausgeführt, die getrennt voneinander montiert werden können. Das Dichtelement kann also in seiner Längsrichtung in gewissem Masse gestaucht werden, ohne dass die Dichtkante unterbrochen wird. Die Dichtwirkung bleibt also auch in diesem Fall erhalten. Der Überlappungsbereich wird so gewählt, dass die Dichtfunktion auch bei einer im Betrieb maximal auftretenden Verschiebung des Endbereichs erhalten bleibt.

Das Abschlusselement weist ausserdem eine Krümmung auf. Die Krümmung ist so ausgeführt und das Dichtelement ist so angeordnet, dass das Dichtelement in drucklosem Zustand entlang der Krümmung am Abschlusselement anliegt. Durch die Krümmung des Abschlusselements wird auch das Dichtelement gekrümmt. Auf Grund der dadurch entstehenden Spannung innerhalb des Dichtelements drückt es sich in der Krümmung gegen das Abschlusselement. Obwohl das Dichtelement und das Abschlusselement als zwei separate Teile ausgeführt sind, existiert damit auch im drucklosen Zustand kein Spalt zwischen den beiden Elementen und sie bilden eine durchgängige Dichtkante. Unter einem "drucklosen Zustand" ist in diesem Zusammenhang zu verstehen, dass auf beiden Seiten des Dichtelements der selbe, insbesondere Atmosphärendruck herrscht.

Damit wird eine sichere Dichtfunktion der Dichtungsanordnung mit einem flexiblen Dichtelement und einem Abschlusselement erreicht, die nicht fest miteinander verbundenen sind. Dies ermöglicht einen einfachen Einbau der Dichtungsanordnung, da Dichtelement und Abschlusselement getrennt voneinander montiert werden können. Ausserdem ist kein Arbeitsschritt für das feste Verbinden der beiden Elemente notwendig, was mit Zeit, Aufwand und damit letztendlich Kosten verbunden wäre.

Das Dichtelement und das Abschlusselement werden beim Einbau insbesondere so angeordnet, dass die Krümmung des Abschlusselements in die Richtung offen ist, aus der im Betrieb der höhere Druck herrscht. Damit wird das Dichtelement im Betrieb gegen das Abschlusselement gedrückt und so eine besonders effektive Dichtwirkung erzielt. Ausserdem kann so verhindert werden, dass das Dichtelement vom Abschlusselement weg gedrückt, also abgehoben wird, und so zwischen Abschlusselement und Dichtelement ein Spalt und damit Leckage entsteht.

Das Dichtelement und das Abschusselement sind insbesondere aus einem Elastomer hergestellt, wobei sowohl dasselbe Material, als auch unterschiedliche Materialen verwendet werden können. Das Abschlusselement ist insbesondere aus einem weniger flexiblen Material ausgeführt. Die Elemente können auch aus anderen geeigneten Materialien hergestellt sein.

Das Dichtelement weist insbesondere einen runden Querschnitt auf, es ist also insbesondere als eine so genannte Rundschnur ausgeführt. Eine Rundschnur ist quasi ein "aufgeschnittener" O-Ring und weist hinsichtlich der Dichtfunktion dieselben Vorteile wie O-Ringe auf. Es sind aber auch andere Querschnitte, beispielsweise oval, viereckig, x-förmig, möglich.

In Ausgestaltung der Erfindung weist eine in Richtung Dichtelement orientierte Seitenfläche des ersten Abschlusselements eine einer Aussenkontur des Dichtelements korrespondierende Kontur auf. Also beispielsweise bei einer Ausführung des Dichtelements als Rundschnur und damit mit einer runden Aussenkontur, weist die genannte Seitenfläche zumindest einen Abschnitt mit einer entsprechenden komplementär abgerundeten Kontur auf. Mit den genannten korrespondierenden Konturen ergibt sich eine grosse Berühr- und damit Dichtfläche zwischen Dichtelement und Abschlusselement, womit eine gute Dichtwirkung erzielt wird. Ausserdem kann sich das Dichtelement in drucklosem Zustand besonders eng an das Abschlusselement anlegen bzw. anschmiegen, so dass die oben genannte Gefahr des Abhebens des Dichtelements vom Abschlusselement besonders gering ist.

In Ausgestaltung der Erfindung sind das erste Abschlusselement und das erste Dichtelement so ausgeführt und angeordnet, dass in drucklosem Zustand das erste Dichtelement mit einer ersten Endfläche, also einer Querschnittefläche am ersten Abschlusselement anstösst. Das Abschlusselement weist dazu insbesondere eine senkrecht zur genannten Krümmung des Abschlusselements orientierten Anschlag auf. Damit kann vorteilhafterweise verhindert werden, dass Fluid zwischen das Dichtelement und das Abschlusselement eindringen und so das Dichtelement vom Abschlusselement abheben kann. Das Dichtelement kann insbesondere so eingebaut werden, dass es in Längsrichtung durch den Anschlag des Abschlusselements ein wenig gestaucht wird, wodurch das genannte Eindringen des Fluids besonders effektiv verhindert wird.

In Ausgestaltung der Erfindung sind das Dichtelement in einer Nut und das Abschlusselement in einer Ausnehmung angeordnet. Damit wird eine besonders gute Dichtwirkung erreicht. Die genannte Ausnehmung ist dabei insbesondere so ausgeführt, dass das Abschlusselement bei einem Zusammenbau der beiden abzudichtenden Bauteile ein wenig zusammengedrückt wird, womit sich eine gute Dichtwirkung des Abschlusselements ergibt.

In Ausgestaltung der Erfindung kann das Abschlusselement analog zum ersten langgestreckten, flexiblen Dichtelement wenigstens ein zweites langgestrecktes, flexibles Dichtelement aufnehmen kann. Das zweite Dichtelement und das erste Abschlusselement sind also so ausgeführt und angeordnet, dass sie in einem zweiten Endbereich des zweiten Dichtelements einen zweiten Überlappungsbereich aufweisen und damit auch eine zweite durchgängige Dichtkante. Diese zweite Dichtkante bleibt auch bei einer Verschiebung des zweiten Endbereichs des zweiten Dichtelements in Richtung eines zweiten Anfangsbereichs innerhalb des zweiten Überlappungsbereichs erhalten. Das erste Abschlusselement weist eine zweite Krümmung auf und das zweite Dichtelement ist so angeordnet, dass es in drucklosem Zustand entlang der zweiten Krümmung am ersten Abschlusselement anliegt. Damit bildet das erste Abschlusselement für das zweite Dichtungselement in analoger Weise wie für das erste Dichtungselement einen Abschluss am jeweiligen Endbereich. Es ist auch möglich, dass in analoger Weise ein drittes oder viertes Dichtungselement vorgesehen ist. Damit kann vorteilhafterweise ein Abschlusselement einen Abschluss für zwei oder mehr Dichtungselemente bilden.

Die Vorteile der erfindungsgemässen Dichtungsanordnung kommen insbesondere bei der Verwendung in einer Pumpe mit einem geteilten Gehäuse zum Tragen, wobei die Dichtungsanordnung zwischen einem ersten und einem zweiten Gehäuseteil angeordnet ist. Die Pumpe ist zur Förderung eines gasförmigen oder flüssigen Fluids, wie beispielsweise Wasser, Erdöl oder ähnlichem vorgesehen. In derartigen Pumpen können sehr hohe Drücke von bis zu 800 bar herrschen, weshalb funktionssichere Dichtungsanordnungen auch bei auftretenden Deformationen der Gehäuseteile der Pumpe besonders wichtig sind. Die Dichtungsanordnung kann zur Abdichtung eines Druckraums nach aussen zur Umgebung der Pumpe eingesetzt werden. Es ist aber auch möglich, die erfindungsgemässe Dichtungsanordnung zur gegenseitigen Abdichtung von verschiedenen Druckräumen im Innern der Pumpe einzusetzen. Jede Leckage zwischen an sich getrennten Druckräumen der Pumpe führt zu Verlusten und damit verbunden zu höheren Betriebskosten beim Betrieb der Pumpe.

Die Pumpe ist insbesondere als eine ein- oder mehrstufige Radial-Kreiselpumpe ausgeführt.

In Ausgestaltung der Erfindung ist das Gehäuse der Pumpe auf Höhe einer Antriebswelle in Längsrichtung geteilt. Mittels eines ersten langgestreckten, flexiblen Dichtelements wird ein auf einer ersten Seite der Antriebswelle angeordneter Niederdruckbereich gegenüber einer Umgebung, mittels eines zweiten langgestreckten, flexiblen Dichtelements der genannte Niederdruckbereich gegenüber einem auf der ersten Seite der Antriebswelle angeordneten Hochdruckbereich und mittels eines dritten langgestreckten, flexiblen Dichtelements der genannte Hochdruckbereich gegenüber der Umgebung abgedichtet. Das erste Abschlusselement ist so ausgeführt und angeordnet, dass es alle drei Dichtelemente aufnimmt und somit mit allen drei Dichtelementen an deren Endbereichen Überlappungsbereiche und entsprechende Krümmungen aufweist.

Damit ist eine besonders sichere Abdichtung der beiden Gehäuseteile der Pumpe möglich.

In Ausgestaltung der Erfindung ist die Krümmung des Abschlusselements in Richtung des Druckbereichs mit dem höheren der beiden an dem Dichtelement anliegenden Drücken geöffnet. Damit ergeben sich die bereits oben genannten Vorteile der genannten Ausrichtung der Krümmung.

Ausserdem ist so gewährleistet, dass auch in dem Fall, in dem sich im Niederdruckbereich der Druck schneller als im Hochdruckbereich aufbaut, es für eine kurze Zeitspanne allenfalls zu einem Fluidstrom und damit zu einer Leckage vom Niederdruckbereich zum Hochdruckbereich kommen kann, aber nie vom Niederdruckbereich zur Umgebung. Damit kann eine Leckage in Richtung Umgebung sicher verhindert werden. Diese mögliche Leckage von Niederdruckbereich zu Hochdruckbereich ist unkritisch, da sie nur beim Druckaufbau für eine kurze Zeitspanne auftreten kann. Dies hat quasi keinen negativen Einfluss auf den Wirkungsgrad der Pumpe.

In Ausgestaltung der Erfindung weist die Dichtungsanordnung wenigstens ein zweites Abschlusselement auf. Das zweite Abschlusselement ist so angeordnet, dass es ein Dichtelement aufnimmt, also an einem Anfangsbereich eines der Dichtelemente einen Überlappungsbereich und eine entsprechende Krümmung aufweist. Damit kann auch am Anfangsbereich des entsprechenden Dichtelements eine vergleichbar gute Dichtwirkung wie am Endbereich erreicht werden.

Dabei ist es möglich, dass für jedes Dichtelement ein zweites Abschlusselement vorgesehen ist. Insbesondere ist aber nur an denjenigen Dichtungselementen, die eine Dichtfunktion gegenüber der Umgebung wahrnehmen, ein zweites Abschlusselement angeordnet. Damit wird eine besonders gute Abdichtung der Druckbereiche zur Umgebung hin erreicht.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: einen Ausschnitt einer Dichtungsanordnung mit einem Endbereich einer Dichtungsanordnung und einem Abschlusselement in einer Draufsicht,
- Fig. 2: einen Schnitt durch ein Dichtelement und ein Abschlusselement in einem Überlappungsbereich zwischen dem Dichtelement und dem Abschlusselement,
- Fig. 3: eine Pumpe mit einem längs geteilten Gehäuse in einer Seitenansicht und
- Fig. 4: ein Schnitt durch die Pumpe auf Höhe einer Antriebswelle.

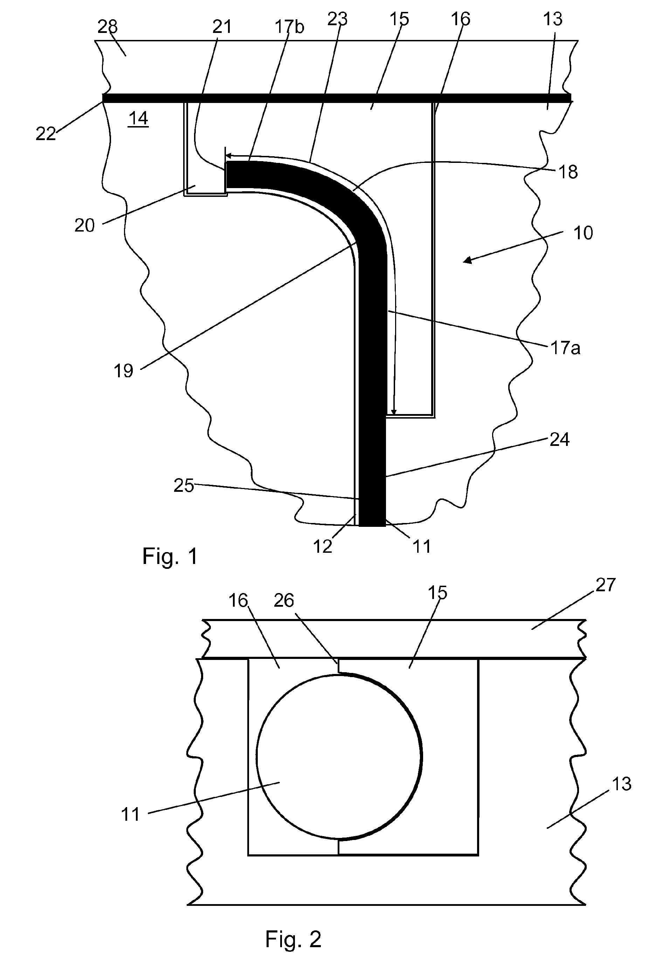

Gemäss Fig. 1 weist eine Dichtungsanordnung 10 ein langgestrecktes flexibles Dichtungselement 11 in Form einer Ringschnur auf, welche aus einem Elastomer hergestellt ist. Das Dichtungselement 11 ist in einer Nut 12 einer planen Fläche 14 eines nur ausschnittweise dargestellten ersten Bauteils 13 angeordnet. Die plane Fläche 14 bildet in einem montierten Zustand des ersten Bauteils 13 eine plane Kontaktfläche zu einem zweiten, in Fig. 1 nicht dargestellten Bauteil.

Die Dichtungsanordnung 10 weist ausserdem ein Abschlusselement 15 auf, das in einer Ausnehmung 16 der planen Fläche 14 des ersten Bauteils 13 angeordnet ist. Das Abschlusselement 15 ist ebenfalls aus einem Elastomer hergestellt, wobei es steifer als das Dichtungselement 11 ausgeführt ist. Die Ausnehmung 16 ist nicht ganz so tief, als dass das Abschlusselement 16 vollständig darin aufgenommen werden könnte. Bei einer Montage des in Fig. 1 nicht dargestellten zweiten Bauteils wird das Abschlusselement 15 deshalb ein wenig zusammengedrückt. Es übt damit zwischen den beiden Bauteilen eine Dichtfunktion aus.

Die Grundform des Abschlusselements 15 wird von zwei senkrecht zueinander angeordneten Quadern gebildet, wobei die damit sich ergebenden inneren Kanten 17a, 17b nicht gerade ausgeführt sind, sondern eine Krümmung 18 aufweisen. Das Abschlusselement 15 und das Dichtelement 11 sind so zueinander angeordnet, dass ein Endbereich 19 des Dichtelements 11 auch in einem drucklosen Zustand an den inneren Kanten 17a, 17b und damit auch an der Krümmung 18 anliegt. Durch die sich ergebende Krümmung des flexiblen Dichtelements 11 drückt sich dieses gegen das Abschlusselement 15, so dass sich zwischen dem Dichtelement 11 und dem Abschlusselement 15 kein Spalt ergibt.

Um eine möglichst grosse Berühr- und damit Dichtfläche zwischen dem Dichtelement 11 und dem Abschlusselement 15 zu erreichen, weist eine in Richtung Dichtelement 11 orientierte Seitenfläche 26 eine einer Aussenkontur des Dichtelements 11 korrespondierende Kontur auf. Wie in Fig. 2 dargestellt, weist das als Rundschnur ausgeführte Dichtelement 11 eine kreisrunde Aussenkontur auf. Dementsprechend weist die genannte Seitenfläche 26 des Abschlusselements 15 damit eine nach innen orientierte halbkreisförmige Kontur auf. Es ist auch möglich, dass die Kontur der Seitenfläche weniger als 180° der Aussenkontur des Dichtelements 11 abgedeckt.

Der Abschnitt des Dichtelements 11, der dann an dem Abschlusselement 15 anliegt, kann als Überlappungsbereich 23 bezeichnet werden. Ausserdem bilden damit das Dichtelement 11 und das Abschlusselement 15 eine durchgängige Dichtkante 24, die von einer in Fig. 1 rechten Aussenkante des Abschlusselements 15 und dem Dichtelement 11 gebildet wird.

Das Abschlusselement 20 weist ausserdem einen Anschlag 20 auf, der so ausgeführt ist, dass eine Endfläche 21 des Dichtelements 11 zumindest in drucklosem Zustand an dem Anschlag 20 anstösst. Der Anschlag 20 ist damit senkrecht zu der inneren Kante 17b des Abschlusselements 15 angeordnet.

Die Dichtungsanordnung 10 kann in der Fig. 1 von links mit Druck beaufschlagt werden. Der Druck wirkt also so, dass er das Dichtelement 11 gegen das Abschlusselement 15 und damit auch gegen die Krümmung 18 drückt. Die Krümmung 18 ist damit in Richtung der Seite der Dichtungsanordnung 10 mit dem höheren Druck offen. Die Aufgabe der Dichtungsanordnung 10 ist es, eine Abdichtung des genannten Drucks in der Fig. 1 nach rechts sicher zu stellen. An einer Kante 22, an die das Abschlusselement 15 anstösst, also in der Fig. 1 nach oben ist keine Abdichtung durch die Dichtungsanordnung 10 notwendig. In diese Richtung ist ein anderer, nicht dargestellter Abschluss beispielsweise ein Deckel mit einer anderen Dichtungsanordnung oder eine Gleitringdichtung vorgesehen.

Das Abschlusselement 15 dient hauptsächlich dazu, eine Leckage am Endbereich 19 des Dichtungselements 11, also entlang der Kante 22 zu verhindern. Würde das Dichtungselement 11 ohne Abschlusselement 15 senkrecht an die Kante 22 anstossen, so wäre nur dann eine ausreichende Dichtwirkung gegeben, wenn die Endfläche 21 des Dichtelements 11 auch unter Druckbelastung an die Kante 22 anstossen würde. Da das Dichtelement 11 flexibel ausgeführt ist, könnte das nicht sicher gestellt werden. Es bestünde vielmehr die Gefahr, dass sich sobald ein kleiner Spalt zwischen Endfläche 21 des Dichtelements 11 und Kante 22 entsteht, durch den dann auch im Spalt wirkenden Druck der Endbereich 19 in Richtung eines dem Endbereich 19 gegenüber liegenden Anfangsbereichs 25 des Dichtelements 11 verschoben, das Dichtelement 11 also gestaucht wird, und sich so der Spalt noch weiter vergrössern würde. Damit wäre die Dichtwirkung in diesem Bereich nicht mehr sichergestellt und es käme zu einer Leckage.

Durch die beschriebene Ausgestaltung und Anordnung des Dichtelements 11 und des Abschlusselements 15 ist die Dichtwirkung der Dichtungsanordnung 10 auch im Bereich der Kante 22, also dort wo das Abschlusselement 15 angeordnet ist, gewährleistet. Auf Grund des Überlappungsbereichs 23 von Dichtelement 11 und Abschlusselement 15 kann der Endbereich 19 des Dichtelements 11 in Richtung des in Fig. 1 nicht dargestellten Anfangsbereichs verschoben, das Dichtelement 11 also gestaucht werden, ohne dass die Dichtkante 24 unterbrochen wird. Ausserdem wird durch den Anschlag 20 und das beschriebene, auch in drucklosem Zustand vorhandene Anliegen des Dichtelements 11 an das Abschlusselement 15 verhindert, dass unter Druck stehendes Medium zwischen Dichtelement 11 und Abschlusselement 15 gelangen kann und das Dichtelement 11 vom Abschlusselement 15 abheben kann, womit ein Spalt und damit Leckage entstehen würde.

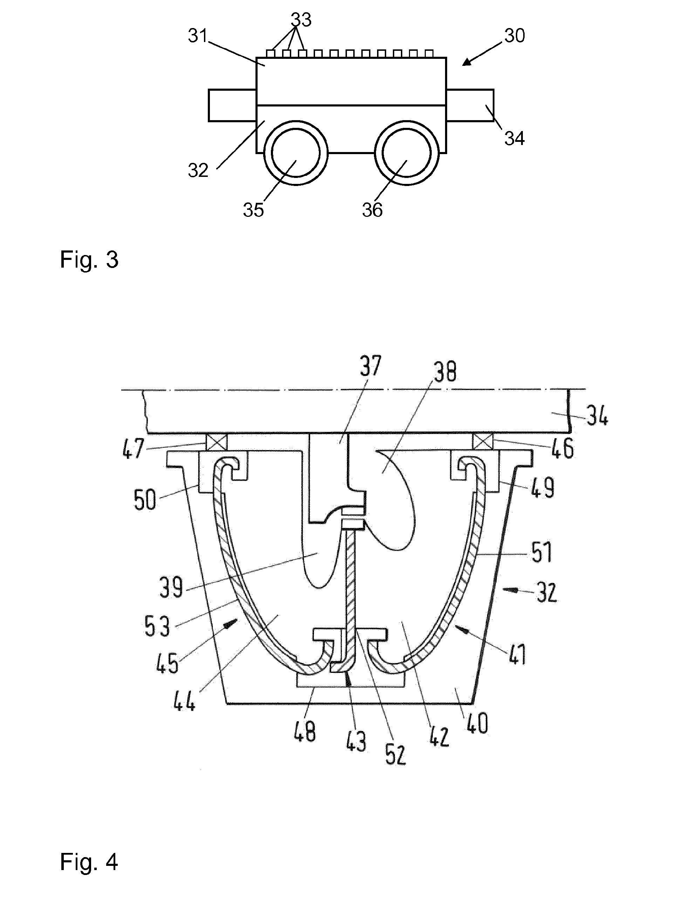

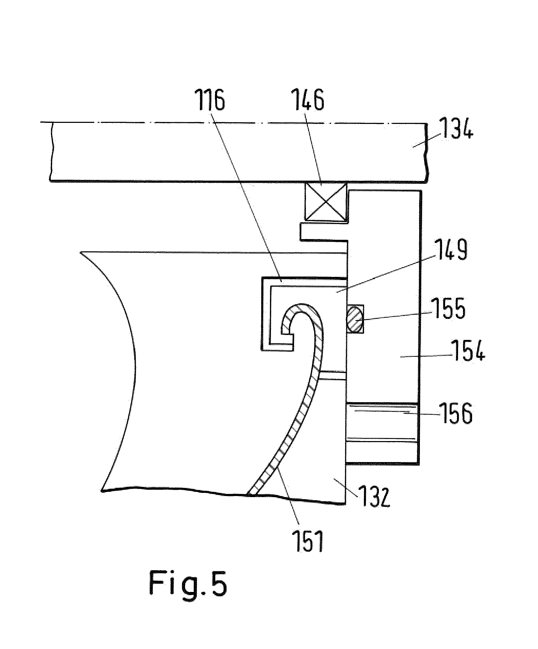

Die beschriebene Dichtungsanordnung ist insbesondere in einer Pumpe mit einem geteilten Gehäuse einsetzbar. Eine derartige Pumpe ist sehr schematisch in Fig. 3 dargestellt. Gemäss Fig. 3 weist eine als Radial-Kreiselpumpe ausgeführte Pumpe 30 ein oberes Gehäuseteil 31 und ein unteres Gehäuseteil 32 auf, welche über Schrauben 33 miteinander verschraubt sind. Die beiden Gehäuseteile 31 und 32 sind auf Höhe einer Antriebswelle 34 zusammengefügt. Zwischen den beiden Gehäuseteilen 31 und 32 sind mehrere, in der Fig. 3 nicht dargestellte, Dichtungsanordnungen entsprechend den Fig. 1 und 2 angeordnet.

Am unteren Gehäuseteil 32 sind eine Eingangsöffnung 35 und eine Ausgangsöffnung 36 angeordnet. Über die Eingangsöffnung 35 kann das zu fördernde Fluid, beispielsweise Wasser angesaugt und über die Ausgangsöffnung 36 unter höherem Druck wieder abgegeben werden. Die Pumpe 30 wird dazu von einer nicht dargestellten Elektromaschine über die Antriebswelle 34 angetrieben.

Fig. 4 zeigt einen Schnitt durch die Pumpe 30 entlang einer Kontaktfläche 40 zwischen den beiden Gehäuseteilen 31, 32. Die Kontaktfläche 40 ist bezüglich der Antriebswelle 34 symmetrisch aufgebaut, weshalb sie nur für eine Seite der Antriebswelle 34 dargestellt ist. Ein Impeller 37 ist drehfest mit der Antriebswelle 34 verbunden. Der Impeller 37 saugt Fluid aus einem Niederdruckkanal 38, der mit der Eingangsöffnung 35 verbunden ist, und fördert es unter Erhöhung des Drucks in einen Hochdruckkanal 39, der mit der Ausgangsöffnung 36 verbunden ist.

Die Pumpe kann auch als eine mehrstufige Pumpe ausgeführt sein. In diesem Fall wären der Niederdruckkanal mit einem Hochdruckkanal der vorgeschalteten Pumpenstufe und der Hochdruckkanal mit einem Niederdruckkanal einer nachgeschalteten Pumpenstufe verbunden.

An der Kontaktfläche 40 sind insgesamt drei Dichtungsanordnungen angeordnet. Eine erste Dichtungsanordnung 41 mit einem ersten langgestreckten, flexiblen Dichtelement 51 dient zur Abdichtung eines Niederdruckbereichs 42 gegenüber der Umgebung der Pumpe 30. Eine zweite Dichtungsanordnung 43 mit einem zweiten langgestreckten, flexiblen Dichtelement 52 dient zur Abdichtung des Niederdruckbereichs 42 gegenüber einem Hochdruckbereich 44. Eine dritte Dichtungsanordnung 45 mit einem dritten langgestreckten, flexiblen Dichtelement 53 dient zur Abdichtung des Hochdruckbereichs 44 gegenüber der Umgebung.

Dabei ist der Niederdruckkanal 38 innerhalb des Niederdruckbereichs 42 angeordnet, welcher auf der dargestellten ersten Seite der Antriebswelle 34 vom Impeller 37, der zweiten Dichtungsanordnung 43, der ersten Dichtungsanordnung 41 und einer zwischen dem unteren Gehäuseteil 32 und der Antriebswelle 34 in Verlängerung zur ersten Dichtungsanordnung 41 angeordneten ersten Gleitringdichtung 46 gebildet wird.

Der Hochdruckkanal 39 ist innerhalb des Hochdruckbereichs 44 angeordnet, welcher auf der dargestellten ersten Seite der Antriebswelle 34 vom Impeller 37, der zweiten Dichtungsanordnung 43, der dritten Dichtungsanordnung 45 und einer zwischen dem unteren Gehäuseteil 32 und der Antriebswelle 34 in Verlängerung zur dritten Dichtungsanordnung 45 angeordneten zweiten Gleitringdichtung 47 gebildet wird.

Die drei Dichtungsanordnungen 41, 43, 45 sind entsprechend der Dichtungsanordnung 10 aus Fig. 1 und 2 ausgeführt. An ihren Endbereichen, an denen alle drei Dichtelemente 51, 52, 53 der Dichtungsanordnungen 41, 43, 45 zusammen laufen, ist ein gemeinsames Abschlusselement 48 angeordnet, das entsprechend dem Abschlusselement 15 aus Fig. 1 und 2 für jedes Dichtelement 51, 52, 53 jeweils eine Krümmung und einen Anschlag aufweist. Die Krümmung der zweiten Dichtungsanordnung 43 ist dabei in Richtung Hochdruckbereich 44 offen.

Das Dichtelement 51 der ersten Dichtungsanordnung 41 weist auch an ihrem Anfangsbereich ein zweites Abschlusselement 49 auf, das direkt an die Gleitringdichtung 46 angrenzt und auch gegenüber der Gleitringdichtung 46 eine Dichtfunktion ausübt. Das zweite Abschlusselement 49 ist entsprechend dem Abschlusselement 15 aus Fig. 1 und 2 ausgeführt. Die Krümmung des zweiten Abschlusselements 49 der ersten Dichtungsanordnung 41 ist gegenüber dem Niederdruckbereich 42 offen.

Ebenso weist die dritte Dichtungsanordnung 45 auch am Anfangsbereich des Dichtelements 53 ein zweites Abschlusselement 50 auf, das direkt an die Gleitringdichtung 47 angrenzt und auch gegenüber der Gleitringdichtung 47 eine Dichtfunktion ausübt. Das zweite Abschlusselement 50 ist ebenso entsprechend dem Abschlusselement 15 aus Fig. 1 und 2 ausgeführt. Die Krümmung des zweiten Abschlusselements 50 der ersten Dichtungsanordnung 45 ist gegenüber dem Hochdruckbereich 44 offen.

Die zweite Dichtungsanordnung 43 weist am Anfangsbereich des Dichtelements 52 kein zweites Abschlusselement auf. Hier können kleinere Leckagen akzeptiert werden, da hier nur Fluid vom Hochdruckbereich 44 zum Niederdruckbereich 42 (oder umgekehrt) gelangen kann, aber sicher nicht in die Umgebung.

Durch die beschriebene und in Fig. 4 dargestellte Anordnung der Dichtungsanordnungen 41, 43 und 45 ist sichergestellt, dass zu keinem Zeitpunkt Fluid in die Umgebung der Pumpe 30 entweichen kann. Selbst wenn bei einem Anfahren der Pumpe 30 der Druck im Niederdruckbereich 42 schneller ansteigt als im Hochdruckbereich 44, kann kein Fluid in die Umgebung entweichen. In diesem Fall kann zwar das Dichtelement 52 der zweiten Dichtungsanordnung 43 vom Abschlusselement 48 abgehoben werden, wodurch ein Spalt zwischen Dichtelement 52 und Abschlusselement 48 entstehen kann. Über den dadurch entstehenden Spalt kann aber nur Fluid vom Niederdruckbereich 42 in den Hochdruckbereich 44 gelangen, aber nicht in die Umgebung. Sobald sich nach dem Anfahren der Pumpe 30 der Druck im Hochdruckbereich 44 auf sein normales, gegenüber dem Niederdruckbereich 42 höheren Druck eingestellt hat, wird das Dichtelement 52 der zweiten Dichtungsanordnung 43 durch den Druck im Hochdruckbereich 44 so gegen die Krümmung des Abschlusselements 48 gedrückt, dass der genannte Spalt geschlossen und die Leckage beendet wird.

## Patentansprüche

1. Dichtungsanordnung zur Anordnung zwischen zwei Bauteilen, die eine plane Kontaktfläche aufweisen, mit
- einem ersten langgestreckten, flexiblen Dichtelement (11, 51, 52, 53), welches einen ersten Anfangsbereich (25) und einen ersten Endbereich (19) aufweist und
- einem ersten Abschlusselement (15, 48), welches so ausgeführt ist, dass es eine Dichtfunktion ausüben kann,
wobei das erste Dichtelement (11, 51, 52, 53) und das erste Abschlusselement (15, 48) so ausgeführt und angeordnet sind, dass sie im ersten Endbereich (19) des ersten Dichtelements (15) einen ersten Überlappungsbereich (23) aufweisen und damit eine erste durchgängige Dichtkante (24) bilden,
**dadurch gekennzeichnet, dass**
- das erste Dichtelement (11, 51, 52, 53) gegenüber dem ersten Abschlusselement (15, 48) so verschiebbar angeordnet ist, dass die erste Dichtkante (24) auch bei einer Verschiebung des ersten Endbereichs (19) des ersten Dichtelements (11, 51, 52, 53) in Richtung erstem Anfangsbereich (25) innerhalb des ersten Überlappungsbereichs (23) erhalten bleibt und
- das erste Abschlusselement (15, 48) eine erste Krümmung (18) aufweist und das erste Dichtelement (11, 51, 52, 53) so angeordnet ist, dass es in drucklosem Zustand entlang der ersten Krümmung (18) am ersten Abschlusselement (15, 48) anliegt.

2. Dichtungsanordnung nach Anspruch 1,
**dadurch gekennzeichnet, dass**
eine in Richtung Dichtelement (11, 51, 52, 53) orientierte Seitenfläche (26) des ersten Abschlusselements (15, 48) eine einer Aussenkontur des Dichtelements (11, 51, 52, 53) korrespondierende Kontur aufweist.

3. Dichtungsanordnung nach Anspruch 1 oder 2,
**dadurch gekennzeichnet, dass**
das erste Abschlusselement (15, 48) und das erste Dichtelement (11, 51, 52, 53) so ausgeführt und angeordnet sind, dass in drucklosem Zustand das erste Dichtelement (11, 51, 52, 53) mit einer ersten Endfläche (21) am ersten Abschlusselement (15, 48) anstösst.

4. Dichtungsanordnung nach einem der Ansprüche 1 bis 3,
**dadurch gekennzeichnet, dass**
das erste Dichtelement (11, 51, 52, 53) in einer ersten Nut (12) angeordnet ist.

5. Dichtungsanordnung nach einem der Ansprüche 1 bis 4,
**dadurch gekennzeichnet, dass**
das erste Abschlusselement (15, 48) in einer ersten Ausnehmung (16) angeordnet ist.

6. Dichtungsanordnung nach einem der Ansprüche 1 bis 5,
**dadurch gekennzeichnet, dass**
das Abschlusselement (48) analog zum ersten langgestreckten, flexiblen Dichtelement (51) wenigstens ein zweites langgestrecktes, flexibles Dichtelement (52, 53) aufnehmen kann.

7. Pumpe mit einem geteilten Gehäuse, wobei zwischen einem ersten Gehäuseteil (31) und einem zweiten Gehäuseteil (32) eine Dichtungsanordnung nach einem der Ansprüche 1 bis 6 angeordnet ist.

8. Pumpe nach Anspruch 7,
**dadurch gekennzeichnet, dass**
- das Gehäuse (31, 32) auf Höhe einer Antriebswelle (34) in Längsrichtung geteilt ist und mittels
- eines ersten langgestreckten, flexiblen Dichtelements (51) ein auf einer ersten Seite der Antriebswelle (34) angeordneter Niederdruckbereich (42) gegenüber einer Umgebung,
- eines zweiten langgestreckten, flexiblen Dichtelements (52) der genannte Niederdruckbereich (42) gegenüber einem auf der ersten Seite der Antriebswelle (34) angeordneten Hochdruckbereich (44) und
- eines dritten langgestreckten, flexiblen Dichtelements (53) der genannte Hochdruckbereich (44) gegenüber der Umgebung
abgedichtet ist und
das erste Abschlusselement (48) so ausgeführt und angeordnet ist, dass es alle drei Dichtelementen (51, 52, 53) aufnimmt.

9. Pumpe nach Anspruch 8,
**dadurch gekennzeichnet, dass**
die Krümmung des Abschlusselements (18) in Richtung des Druckbereichs mit dem höheren der beiden an dem Dichtelement anliegenden Drücken geöffnet ist.

10. Pumpe nach einem der Ansprüche 7 bis 9,
**gekennzeichnet durch**
wenigstens ein zweites Abschlusselement (49, 50), das so angeordnet ist, dass es ein Dichtelement (51, 53) aufnimmt.

11. Pumpe nach Anspruch 10,
**gekennzeichnet durch**
ein zweites Abschlusselement (49) am ersten Dichtelement (51) zwischen dem genannten Niederdruckbereich (42) und der Umgebung und ein drittes Abschlusselement (50) am dritten Dichtelement (53) zwischen dem genannten Hochdruckbereich (46) und der Umgebung.

## Claims

1. A sealing arrangement for placement between two components which have a planar contact surface, including
- a first elongate flexible sealing element (11, 51, 52, 53) which has a first start region (25) and a first end region (19); and
- a first termination element (15, 48) which is designed so that it can carry out a sealing function;
wherein the first sealing element (11, 51, 52, 53) and the first termination element (15, 48) are designed and arranged so that they have a first overlap region (23) in the first end region (19) of the first sealing element (15) and thus form a first continuous sealing edge (24), **characterized in that**
- the first sealing element (11, 51, 52, 53) is displaceably arranged relative to the first termination element (15, 48) so that the first sealing edge (24) is maintained also for a displacement of the first end region (19) of the first sealing element (11, 51, 52, 53) in the direction of the first start region (25) within the first overlap region (23); and
- the first termination element (15, 48) has a first curvature (18) and the first sealing element (11, 51, 52, 53) is arranged so that it contacts the first termination element (15, 48) along the first curvature (18) in a pressure-free state.

2. A sealing arrangement in accordance with claim 1,
**characterized in that**
a side surface (26) of the first termination element (15, 48) orientated in the direction of the sealing element (11, 51, 52, 53) has a contour corresponding to an outer contour of the sealing element (11, 51, 52, 53).

3. A sealing arrangement in accordance with claim 1 or claim 2,
**characterized in that**
the first termination element (15, 48) and the first sealing element (11, 51, 52, 53) are designed and arranged so that the first sealing element (11, 51, 52, 53) abuts at the first termination element (15, 48) with a first end surface (21) in a pressure-free state.

4. A sealing arrangement in accordance with any one of the preceding claims 1 to 3,
**characterized in that**
the first sealing element (11, 51, 52, 53) is arranged in a first groove (12).

5. A sealing arrangement in accordance with any one of the preceding claims 1 to 4,
**characterized in that**
the first termination element (15, 48) is arranged in a first cut-out (16).

6. A sealing arrangement in accordance with any one of the preceding claims 1 to 5,
**characterized in that**
the termination element (48) can receive at least a second elongate flexible sealing element (52, 53) in analogy to the first elongate flexible sealing element (51).

7. A pump having a divided housing, wherein a sealing arrangement in accordance with any one of the preceding claims 1 to 6 is arranged between a first housing part (31) and a second housing part (32).

8. A pump in accordance with claim 7, **characterized in that**
- the housing (31, 32) is divided in the longitudinal direction at the level of a drive shaft (34); and
- a low pressure region (42), arranged at a first side of the drive shaft (34), is sealed off with regard to an environment by means of a first elongate flexible sealing element (51);
- the mentioned low-pressure region (42) is sealed off with regard to a high-pressure region (44) arranged at a first side of the drive shaft (34) by means of a second elongate flexible sealing element (52), and
- the mentioned high-pressure region (44) is sealed off with regard to the environment by means of a third elongate flexible sealing element (53); and
the first termination element (48) is designed and arranged so that it receives all three sealing elements (51, 52, 53).

9. A pump in accordance with claim 8,
**characterized in that**
the curvature of the termination element (18) is open in the direction of the pressure region having the higher of the two pressures present at the sealing element.

10. A pump in accordance with any one of the preceding claims 7 to 9,
**characterized by**
at least a second termination element (49, 50) which is arranged so that it receives a sealing element (51, 53).

11. A pump in accordance with claim 10,
**characterized by**
a second termination element (49) at the first sealing element (51) between the mentioned low-pressure region (42) and the environment; and
a third termination element (50) at the third sealing element (53) between the mentioned high-pressure region (46) and the environment.

## Revendications

1. Dispositif d'étanchéité destiné à être disposé entre deux composants qui présentent une surface de contact plane, avec
- un premier élément d'étanchéité (11, 51, 52, 53) flexible allongé qui présente une première zone initiale (25) et une première zone terminale (19) et
- un premier élément d'obturation (15, 48) qui est réalisé de telle sorte qu'il peut assurer une fonction d'étanchéité,
le premier élément d'étanchéité (11, 51, 52, 53) et le premier élément d'obturation (15, 48) étant réalisés et disposés de telle sorte que, dans la première zone terminale (19) du premier élément d'étanchéité (15), ils présentent une première zone de chevauchement (23) et forment ainsi une première arête d'étanchéité (24) continue,
**caractérisé en ce que**
- le premier élément d'étanchéité (11, 51, 52, 53) est disposé de façon déplaçable par rapport au premier élément d'obturation (15, 48) de telle sorte que la première arête d'étanchéité (24), même en cas de déplacement de la première zone terminale (19) du premier élément d'étanchéité (11, 51, 52, 53) en direction de la première zone initiale (25), demeure à l'intérieur de la première zone de chevauchement (23), et
- le premier élément d'obturation (15, 48) présente un premier coude (18), et le premier élément d'étanchéité (11, 51, 52, 53) est disposé de telle sorte que, dans l'état hors pression, il est plaqué le long du premier coude (18) sur le premier élément d'obturation (15, 48).

2. Dispositif d'étanchéité selon la revendication 1,
**caractérisé en ce**
**qu'**une surface latérale (26) du premier élément d'obturation (15, 48) orientée en direction de l'élément d'étanchéité (11, 51, 52, 53) présente un contour correspondant à un contour extérieur de l'élément d'étanchéité (11, 51, 52, 53).

3. Dispositif d'étanchéité selon la revendication 1 ou 2,
**caractérisé en ce que**
le premier élément d'obturation (15, 48) et le premier élément d'étanchéité (11, 51, 52, 53) sont réalisés et disposés de telle sorte que, dans l'état hors pression, le premier élément d'étanchéité (11, 51, 52, 53) heurte, par une première surface d'extrémité (21), le premier élément d'obturation (15, 48).

4. Dispositif d'étanchéité selon une des revendications 1 à 3,
**caractérisé en ce que**
le premier élément d'étanchéité (11, 51, 52, 53) est disposé dans une première rainure (12).

5. Dispositif d'étanchéité selon une des revendications 1 à 4,
**caractérisé en ce que**
le premier élément d'obturation (15, 48) est disposé dans un premier creux (16).

6. Dispositif d'étanchéité selon une des revendications 1 à 5,
**caractérisé en ce que**
l'élément d'obturation (48), de façon analogue au premier élément d'étanchéité (51) flexible allongé, peut recevoir au moins un deuxième élément d'étanchéité (52, 53) flexible allongé.

7. Pompe avec un carter divisé, un dispositif d'étanchéité selon une des revendications 1 à 6 étant disposé entre une première partie de corps (31) et une deuxième partie de corps (32).

8. Pompe selon la revendication 7,
**caractérisée en ce que**
- le carter (31, 32) est divisé dans le sens de la longueur à la hauteur d'un arbre d'entraînement (34) et **en ce que**, au moyen
- d'un premier élément d'étanchéité (51) flexible allongé, une zone basse pression (42) disposée sur un premier côté de l'arbre d'entraînement (34), est rendue étanche vis-à-vis d'un environnement,
- la zone basse pression (42) citée est rendue étanche vis-à-vis d'une zone haute pression (44) disposée sur le premier côté de l'arbre d'entraînement (34) au moyen d'un deuxième élément d'étanchéité (52) flexible allongé, et
- la zone haute pression (44) est rendue étanche vis-à-vis de l'environnement au moyen d'un troisième élément d'étanchéité (53) flexible allongé, et
le premier élément d'obturation (48) est réalisé et disposé de telle sorte qu'il reçoit la totalité des trois éléments d'étanchéité (51, 52, 53).

9. Pompe selon la revendication 8,
**caractérisée en ce que**
le coude de l'élément d'obturation (18) est ouvert en direction de la zone de pression ayant la plus élevée des deux pressions régnant sur l'élément d'étanchéité.

10. Pompe selon une des revendications 7 à 9,
**caractérisée par**
au moins un deuxième élément d'obturation (49, 50) qui est disposé de telle sorte qu'il reçoit un élément d'étanchéité (51, 53).

11. Pompe selon la revendication 10,
**caractérisée par**
un deuxième élément d'obturation (49) sur le premier élément d'étanchéité (51) entre la zone basse pression (42) citée et l'environnement, et par un troisième élément d'obturation (50) sur le troisième élément d'étanchéité (53) entre la zone haute pression (46) citée et l'environnement.
